# EUROPÄISCHE PATENTSCHRIFT

(11) **EP 1 704 926 B1**
(45) Veröffentlichungstag und Bekanntmachung des Hinweises auf die Patenterteilung: **30.04.2014**
(21) Anmeldenummer: 06005516.7
(22) Anmeldetag: 17.03.2006
(51) Int. Cl.: B05B 15/12

(54) **Vorrichtung zum Abtrennen von Nasslack-Overspray**
Apparatus for separating liquid paint overspray
Dispositif de séparation de l'excédent de peinture liquide

(30) Priorität: 24.03.2005 DE 102005013708
(43) Veröffentlichungstag der Anmeldung: 27.09.2006
(73) Patentinhaber: Dürr Systems GmbH, 74321 Bietigheim-Bissingen (DE)
(72) Erfinder: Wieland, Dietmar, 70180 Stuttgart (DE); Tobisch, Wolfgang, 70193 Stuttgart (DE); Rundel, Klaus, 73728 Esslingen (DE); Rajtschan, Alexander, 70469 Stuttgart (DE)
(74) Vertreter: Hoeger, Stellrecht & Partner Patentanwälte

(56) Entgegenhaltungen:
- EP-A- 1 512 465

## Beschreibung

Die vorliegende Erfindung betrifft eine Vorrichtung zum Abtrennen von Nasslack-Overspray aus einem Overspray-Partikel enthaltenden Abluftstrom, wobei die Overspray-Partikel in einem Applikationsbereich einer Lackieranlage in den Abluftstrom gelangen.

Solche Vorrichtungen werden in Anlagen zum Lackieren von Werkstücken, insbesondere zum Spritzlackieren von Fahrzeugkarosserien, eingesetzt, in denen ein Luftstrom durch einen Applikationsbereich der Anlage erzeugt wird, welcher überschüssigen Nasslack aus dem Applikationsbereich abführt.

Es ist bekannt, den mitgeführten Nasslack-Overspray in einer Auswaschungsanlage mittels einer Waschflüssigkeit aus dem Abluftstrom abzuscheiden.

Die bekannten Auswaschungsanlagen haben jedoch insbesondere bei Umluftführung den Nachteil, dass dem Abluftstrom, aus dem der Nasslack-Overspray abgeschieden wird, eine hohe Feuchtigkeitsmenge zugeführt wird, so dass der Abluftstrom nach erfolgter Abscheidung des Nasslack-Oversprays einer energieintensiven Entfeuchtung unterzogen werden muss.

Ferner ist für die Aufbereitung der mit dem Nasslack-Overspray beladenen Waschflüssigkeit ein großer Aufwand erforderlich.

Die EP 1 512 465 A1 offenbart eine Vorrichtung zum Abtrennen von Nasslack-Overspray aus einem Overspray-Partikel enthaltenden Abluftstrom nach dem Oberbegriff des Anspruchs 1, wobei die Overspray-Partikel in einem Applikationsbereich einer Lackieranlage in den Abluftstrom gelangen. Dabei durchströmt der gesamte Abluftstrom zuerst abreinigbare Siebe, an denen ein Großteil des Lack-Oversprays aus der Luftströ-mung abgeschieden wird, und anschließend nicht regenerierbare Taschenfilter, an denen der nach Passieren der ersten Abtrennstufe noch in dem Luftstrom verbliebene Lack-Overspray zurückgehalten wird.

Der vorliegenden Erfindung liegt die Aufgabe zugrunde, eine Vorrichtung der eingangs genannten Art zu schaffen, welche eine Abtrennung des Nasslack-Oversprays aus dem Abluftstrom in einfacher, zuverlässiger und energiesparender Weise ermöglicht.

Diese Aufgabe wird durch eine Vorrichtung nach Anspruch 1 gelöst.

Unter einem regenerierbaren Oberflächenfilter ist dabei ein Filter zu verstehen, das eine Filteroberfläche aufweist, an welcher der vom Abluftstrom mitgeführte Nasslack-Overspray abgeschieden wird, und das, vorzugsweise im laufenden Betrieb der Vorrichtung, von dem darauf abgeschiedenen Lack-Overspray reinigbar ist.

Ein solches regenerierbares Oberflächenfilter ist eine "trockene" Abtrennvorrichtung, in welcher keine Flüssigkeit zum Auswaschen der Overspray-Partikel aus dem Abluftstrom verwendet wird, sondern Filterelemente zum Abtrennen der Overspray-Partikel aus dem Luftstrom verwendet werden.

Dabei kann die Abreinigung des regenerierbaren Oberflächenfilters mittels einer "trockenen" Abreinigungsvorrichtung, d.h. ohne Verwendung einer Reinigungsflüssigkeit, oder mittels einer "nassen" Abreinigungsvorrichtung, d.h. unter Verwendung einer Reinigungsflüssigkeit, erfolgen.

Eine "trockene" Abtrennvorrichtung kann auch mit einer "nassen" Abreinigungsvorrichtung versehen sein, solange nur die Abscheidung der Overspray-Partikel an dem regenerierbaren Abtrennelement auf trockene Weise, d.h. ohne Auswaschung mittels einer Auswasehflüssigkeit, erfolgt.

Unter einem nicht regenerierbaren Filter ist ein Filter zu verstehen, an welchen der vom Abluftstrom mitgeführte Nasslack-Overspray abgeschieden wird und das nicht von dem darauf abgeschiedenen Lack-Overspray reinigbar ist, ohne aus der Vorrichtung entnommen zu werden.

Ein solches nicht regenerierbares Filter kann als ein Tiefenfilter, insbesondere als ein Beutel- oder Taschenfilter, ausgebildet sein.

Auch ein solches nicht regenerierbares Filter ist eine "trockene" Abtrennvorrichtung, in welcher keine Flüssigkeit zum Auswaschen der Overspray-Partikel aus dem Abluftstrom verwendet wird, sondern Filterelemente zum Abtrennen der Overspray-Partikel aus dem Luftstrom verwendet werden.

Vorzugsweise erfolgt die gesamte Abtrennung von Nasslack-Overspray aus dem Overspray-Partikel enthaltenden Abluftstrom vollständig trocken, das heißt ohne Verwendung einer Flüssigkeit zum Auswaschen der Overspray-Partikel aus dem Abluftstrom.

Durch die erfindungsgemäße Aufteilung des Abluftstroms in mindestens einen ersten Teil-Abluftstrom, welcher mittels mindestens eines regenerierbaren Oberflächenfilters gereinigt wird, und einen zweiten Teil-Abluftstrom, welcher mittels mindestens eines nicht regenerierbaren Filters gereinigt wird, ist es möglich, Anteile des Abluftstroms mit unterschiedlicher spezifischer Overspray-Beladung mit jeweils optimal angepasster Filtertechnik zu behandeln.

Insbesondere kann vorgesehen sein, dass ein Anteil des Abluftstroms mit relativ starker Overspray-Beladung, d.h. insbesondere der Teil des Abluftstroms, welcher den Bereich der Lackierkabine durchströmt, der höchstens 0,5 m von dem zu lackierenden Gegenstand entfernt ist, durch regenerierbare Oberflächenfilter gereinigt wird. Da diese regenerierbaren Oberflächenfilter im laufenden Betrieb der Anlage von dem darauf abgeschiedenen Lack-Overspray reinigbar sind, muss der Betrieb der Anlage trotz der hohen in diesem Teil des Abluftstroms anfallenden Overspray-Mengen nicht für einen Austausch von Filtern unterbrochen werden.

Der Anteil des Abluftstroms, welcher eine relativ geringe Overspray-Beladung aufweist, d.h. insbesondere der Teil des Abluftstroms, welcher den mehr als 0,5 m von dem zu lackierenden Gegenstand entfernten Bereich bis hin zur Wand der Lackierkabine durchströmt, kann über nicht regenerierbare Filter geführt werden. Die nicht regenerierbaren Filter sind günstiger in der Anschaffung als regenerierbare Oberflächenfilter. Der Aufwand für den Austausch der mit Overspray beladenen nicht regenierbaren Filter wird bei der erfindungsgemäßen Vorrichtung deutlich reduziert, da nur der Anteil des Abluftstroms mit geringer Overspray-Beladung durch die nicht regenerierbaren Filter geführt wird; auf diese Weise wird die Standzeit der nicht regenerierbaren Filter deutlich verlängert.

Durch die Verwendung von regenerierbaren Oberflächenfiltern und nicht regenierbaren Filtern in den Abtrennvorrichtungen entfällt die Notwendigkeit, eine Auswaschungsanlage und die zugehörige Wasseraufbereitung vorzusehen. Hierdurch werden der Energieverbrauch der Abtrennvorrichtung und (durch den Wegfall der Wasseraufbereitung) auch der Platzbedarf der Vorrichtung deutlich reduziert.

Die Abreinigbarkeit des Oberflächenfilters gewährleistet ferner eine lange Standzeit des Filters auch bei großen Mengen an anfallendem Nasslack-Overspray in den ersten Teil-Abluftstrom.

Bei einer bevorzugten Ausgestaltung der erfindungsgemäßen Vorrichtung ist vorgesehen, dass der erste Teil-Abluftstrom eine höhere spezifische Overspray-Beladung aufweist als der zweite Teil-Abluftstrom.

Insbesondere kann vorgesehen sein, dass der erste Teil-Abluftstrom Luft umfasst, welche einen zu lackierenden Gegenstand, insbesondere eine zu lackierende Fahrzeugkarosserie, in einem Abstand von weniger als 0,5 m umströmt hat. Diese Abluft aus dem Nahbereich des zu lackierenden Gegenstandes weist eine besonders hohe Overspray-Beladung auf.

Insbesondere kann vorgesehen sein, dass der erste Teil-Abluftstrom Luft umfasst, welche einen zu lackierenden Gegenstand direkt angeströmt hat.

Der zweite Teil-Abluftstrom umfasst hingegen vorzugsweise Luft, welche einen zu lackierenden Gegenstand in einem Abstand von mindestens 0,5 m passiert hat. Die Abluft, welche den zu lackierenden Gegenstand in einem Abstand von mindestens ungefähr 0,5 m passiert hat, weist eine nur geringe Overspray-Beladung auf.

Besonders günstig ist es, wenn der zweite Teil-Abluftstrom im wesentlichen nur solche Luft enthält, welche einen zu lackierenden Gegenstand in einem Abstand von mindestens 0,5 m passiert hat.

Bei einer bevorzugten Ausgestaltung der erfindungsgemäßen Vorrichtung ist vorgesehen, dass die Vorrichtung unterhalb einer Lackierkabine angeordnet ist und dass die Aufteileinrichtung mindestens eine Trennwand umfasst, welche im wesentlichen parallel zu einer vertikalen Längsmittelebene der Lackierkabine verläuft.

Ein oberer Rand der Trennwand verläuft vorzugsweise in einem Abstand von mindestens 0,5 m von der vertikalen Längsmittelebene der Lackierkabine.

Besonders günstig ist es, wenn der Abstand des oberen Randes der Trennwand von der vertikalen Längsmittelebene der Lackierkabine mindestens der halben Breite des zu lackierenden Gegenstandes, beispielsweise der zu lackierenden Fahrzeugkarosserie, entspricht, also beispielsweise mindestens ungefähr 0,7 m.

Wenn die Vorrichtung unterhalb einer Lackierkabine angeordnet ist und mindestens einen ersten Abluftkanal umfasst, in welchen der mindestens eine erste Teil-Abluftstrom nach dem Passieren der ersten Abtrennvorrichtung eintritt, so wird ein besonders platzsparender Aufbau der erfindungsgemäßen Vorrichtung erzielt, wenn der erste Abluftkanal innerhalb einer vertikalen Projektion einer Grundfläche der Lackierkabine angeordnet ist.

Wenn die Vorrichtung unterhalb einer Lackierkabine angeordnet ist und mindestens einen zweiten Abluftkanal umfasst, in welchen der mindestens eine zweite Teil-Abluftstrom nach dem Passieren der zweiten Abtrennvorrichtung eintritt, so wird ein besonders platzsparender Aufbau der erfindungsgemäßen Vorrichtung erzielt, wenn der zweite Abluftkanal innerhalb einer vertikalen Projektion einer Grundfläche der Lackierkabine angeordnet ist.

Um die Filter der Vorrichtung, insbesondere die regenerierbaren Oberflächenfilter der ersten Abtrennvorrichtung, möglichst geschützt anzuordnen, ist es von Vorteil, wenn vertikal über der ersten Abtrennvorrichtung und/oder vertikal über der zweiten Abtrennvorrichtung jeweils mindestens ein Abschirmelement angeordnet ist, das ein senkrechtes Herabfallen von Gegenständen, Schmutz und/oder Lackpartikeln aus dem Applikationsbereich auf die erste Abtrennvorrichtung bzw. auf die zweite Abtrennvorrichtung verhindert.

Wenn die Vorrichtung mindestens einen zweiten Abluftkanal umfasst, in welchen der mindestens eine zweite Teil-Abluftstrom nach dem Passieren der zweiten Abtrennvorrichtung eintritt, so kann insbesondere vorgesehen sein, dass der zweite Abluftkanal zumindest teilweise vertikal über der ersten Abtrennvorrichtung angeordnet ist, so dass auf diese Weise der zweite Abluftkanal als Abschirmelement dient, welches die Filterelemente der ersten Abtrennvorrichtung schützt.

Alternativ oder ergänzend hierzu kann vorgesehen sein, dass die nicht regenerierbaren Filter der zweiten Abtrennvorrichtung zumindest teilweise vertikal über der ersten Abtrennvorrichtung angeordnet sind, so dass in diesem Fall die nicht regenerierbaren Filter der zweiten Abtrennvorrichtung als Abschirmelemente dienen, welche die Filterelemente der ersten Abtrennvorrichtung schützen.

Um das Abreinigen des regenerierbaren Oberflächenfilters zu erleichtern, ist es günstig, wenn das mindestens eine regenerierbare Oberflächenfilter eine ein Precoat-Material umfassende Sperrschicht aufweist, welche ein Verkleben der Filteroberfläche verhindert.

Um die Sperrschicht aus Precoat-Material an dem Oberflächenfilter zu erzeugen, kann vorgesehen sein, dass die Vorrichtung mindestens eine Precoat-Zuführeinrichtung umfasst, welche ein Precoat-Material in den ersten Teil-Abluftstrom abgibt.

Dabei kann die Abgabe von Precoat-Material in den ersten Teil-Abluftstrom kontinuierlich oder intervallweise erfolgen.

Als Precoat-Materialien kommen beispielsweise Kalk, Aluminiumsilikate, Aluminiumoxide, Siliziumoxide, Pulverlack oder ähnliches in Betracht.

Grundsätzlich ist jedes Medium als Precoat-Material geeignet, das dazu in der Lage ist, den Flüssigkeitsanteil des Nasslack-Oversprays aufzunehmen.

Grundsätzlich kann die Precoat-Zuführeinrichtung beispielsweise unmittelbar vor dem mindestens einen regenerierbaren Oberflächenfilter angeordnet sein.

Ferner ist es möglich, die mindestens eine Precoat-Zuführeinrichtung im unmittelbaren Anschluss an den Applikationsbereich, beispielsweise im Bodenbereich der Lackierkabine, anzuordnen.

Besonders günstig ist es jedoch, wenn die mindestens eine Precoat-Zuführeinrichtung an einem verengten Bereich des Strömungswegs des ersten Teil-Abluftstroms angeordnet ist. Im verengten Bereich des Strömungswegs des ersten Teil-Abluftstroms herrschen besonders hohe Strömungsgeschwindigkeiten, so dass durch die Zuführung des Precoat-Materials an dieser Stelle eine besonders gute Precoat-Verteilung in dem Abluftstrom durch Venturi-Verwirbelung erzielt wird.

Beim Precoatieren besteht auch die Möglichkeit des Zwischen-Precoatierens, wobei ohne vorheriges Abreinigen des Oberflächenfilters neues Precoat-Material aufgebracht wird, um das spätere Abreinigungsverhalten des Oberflächenfilters zu verbessern.

Das mindestens eine regenerierbare Oberflächenfilter der Abtrennvorrichtung ist vorzugsweise intervallweise abreinigbar.

Alternativ oder ergänzend hierzu kann vorgesehen sein, dass das mindestens eine regenerierbare Oberflächenfilter im Betrieb der Vorrichtung eine feuchte Oberfläche aufweist.

Das Oberflächenfilter kann beispielsweise durch Spül- oder Befeuchtungsmedien wie VE-Wasser, Butylglykol oder andere Lösemittel feucht gehalten werden, um die Abreinigung des Oberflächenfilters zu erleichtern.

Diese Befeuchtungsmedien können an denselben Stellen in den Abluftstrom eingebracht werden wie die vorstehend erläuterten Precoat-Materialien.

Für eine gründliche Abreinigung der Filteroberfläche des Oberflächenfilters ist es günstig, wenn die Oberfläche des mindestens einen regenerierbaren Oberflächenfilters kontinuierlich oder intervallweise abspülbar ist.

Alternativ oder ergänzend hierzu kann vorgesehen sein, dass das mindestens eine regenerierbare Oberflächenfilter durch Druckluftimpulse abreinigbar ist.

Ein besonders energiesparender Betrieb der Lackieranlage wird ermöglicht, wenn die Vorrichtung einen Umluftkreislauf aufweist, in welchem der Abluftstrom, aus welchem der Nasslack-Overspray abgetrennt worden ist, zumindest teilweise erneut dem Applikationsbereich zugeführt wird.

Anspruch 14 ist auf eine Anlage zum Lackieren von Gegenständen, insbesondere von Fahrzeugkarosserien, gerichtet, welche mindestens eine Lackierkabine und mindestens eine erfindungsgemäße Vorrichtung zum Abtrennen von Nasslack-Overspray aus einem Overspray-Partikel enthaltenden Abluftstrom umfasst.

Besondere Ausgestaltungen einer solchen Anlage sind Gegenstand der Ansprüche 15 bis 19.

Weitere Merkmale und Vorteile der Erfindung sind Gegenstand der nachfolgenden Beschreibung und der zeichnerischen Darstellung von Ausführungsbeispielen.

In den Zeichnungen zeigen:

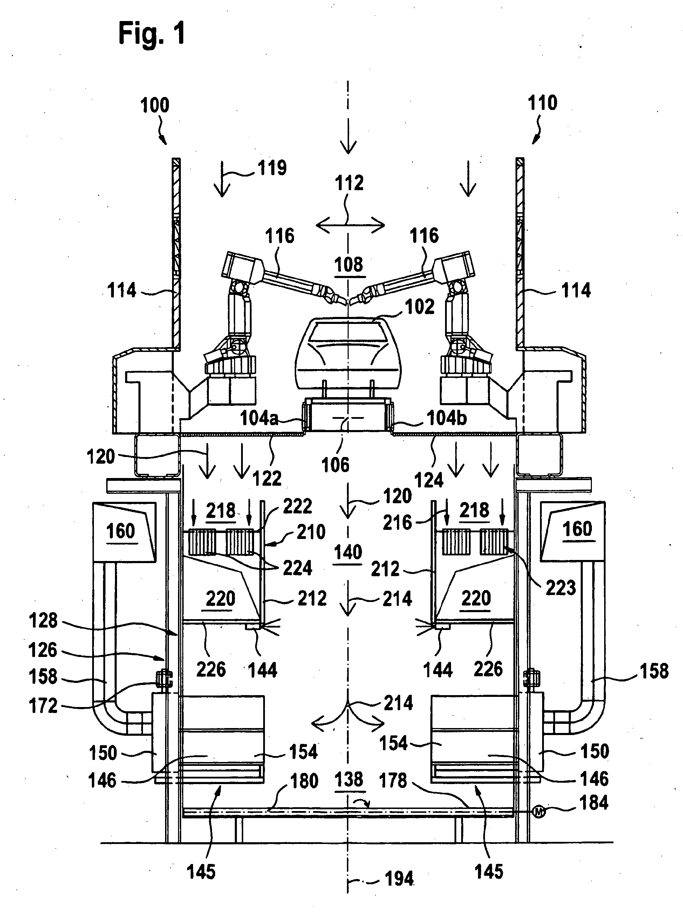

- Fig. 1: einen schematischen vertikalen Querschnitt durch eine erste Ausführungsform einer Lackierkabine mit einer darunter angeordneten Vorrichtung zum Abtrennen von Nasslack-Overspray aus einem Overspray-Partikel enthaltenden Abluftstrom, welche zwei erste Abtrennvorrichtungen mit regenerierbaren Oberflächenfiltern zum Abtrennen des Oversprays aus einem ersten Teil-Abluftstrom und zwei zweite Abtrennvorrichtungen mit nicht regenerierbaren Filtern zum Abtrennen des Oversprays aus einem zweiten Teil-Abluftstrom sowie zwei erste Abluftkanäle, welche seitlich links bzw. rechts neben dem Grundriss der Lackierkabine verlaufen, und zwei zweite Abluftkanäle umfasst, welche innerhalb einer vertikalen Projektion der Grundfläche der Lackierkabine verlaufen;
- Fig. 2: eine schematische Seitenansicht der Anlage aus Fig. 1;
- Fig. 3: eine schematische Draufsicht von oben auf die Anlage aus den Fig. 1 und 2;
- Fig. 4: eine schematische perspektivische Darstellung der Anlage aus den Fig. 1 bis 3;
- Fig. 5: eine schematische Darstellung eines Umluftkreislaufs der Anlage aus den Fig. 1 bis 4;
- Fig. 6: eine schematische perspektivische Darstellung eines regenerierbaren Oberflächenfilters der Anlage aus den Fig. 1 bis 5;
- Fig. 7: einen schematischen Längsschnitt durch das Oberflächenfilter aus Fig. 6, welcher einen Abreinigungsvorgang des Oberflächenfilters illustriert;
- Fig. 8: eine schematische perspektivische Darstellung einer alternativen Ausführungsform eines regenerierbaren Oberflächenfilters;
- Fig. 9: einen schematischen Querschnitt durch das Oberflächenfilter aus Fig. 8, welcher einen Abreinigungsvorgang des Oberflächenfilters illustriert;
- Fig. 10: eine schematische Draufsicht von oben auf das Oberflächenfilter aus den Fig. 8 und 9;
- Fig. 11: einen schematischen Querschnitt durch eine zweite Ausführungsform einer Lackierkabine mit einer darunter angeordneten Vorrichtung zum Abtrennen von Nasslack-Overspray aus einem Overspray-Partikel enthaltenden Abluftstrom, welche zwei erste und zwei zweite innerhalb einer vertikalen Projektion der Grundfläche der Lackierkabine verlaufende Abluftkanäle umfasst;
- Fig. 12: eine schematische Seitenansicht der Anlage aus Fig. 11;
- Fig. 13: eine schematische Draufsicht von oben auf die Anlage aus den Fig. 11 und 12; und
- Fig. 14: eine schematische perspektivische Darstellung der Anlage aus den Fig. 11 bis 13.

Gleiche oder funktional äquivalente Elemente sind in allen Figuren mit denselben Bezugszeichen bezeichnet.

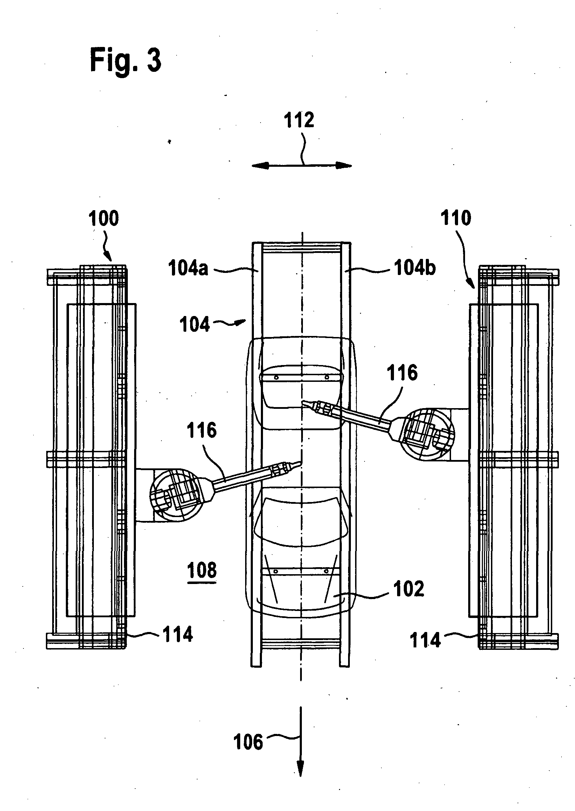

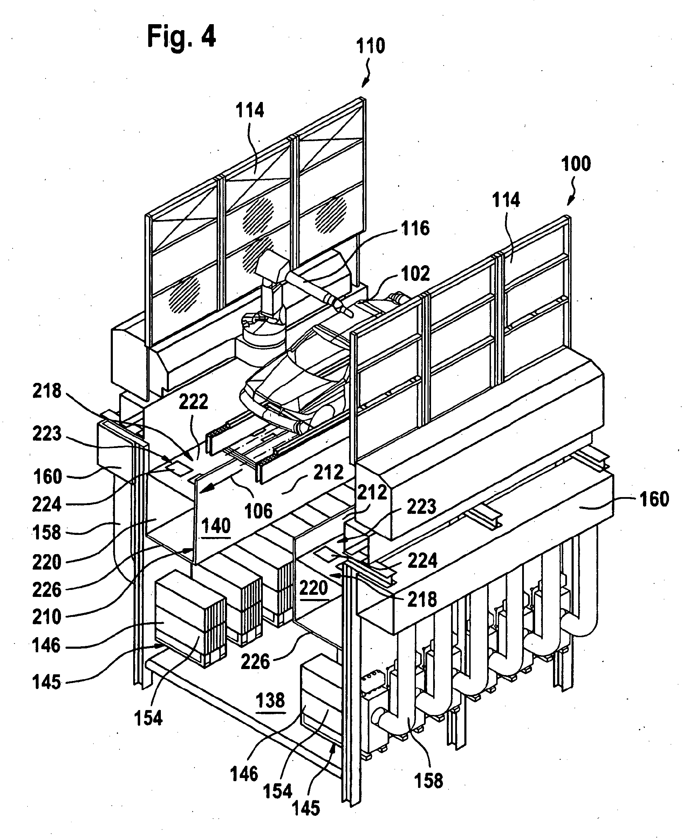

Eine in den Fig. 1 bis 7 dargestellte, als Ganzes mit 100 bezeichnete Anlage zum Spritzlackieren von Fahrzeugkarosserien 102 umfasst eine rein schematisch dargestellte Fördervorrichtung 104, mittels welcher die Fahrzeugkarosserien 102 längs einer Förderrichtung 106 durch einen Applikationsbereich 108 einer als Ganzes mit 110 bezeichneten Lackierkabine bewegt werden können.

Die Fördervorrichtung 104 kann beispielsweise als invertierter Kreisförderer oder auch als invertierter Einschienenförderer ausgebildet sein.

Insbesondere kann die Fördervorrichtung 104 zweiteilig ausgebildet sein und - wie am besten aus den Fig. 1, 3 und 4 zu ersehen ist - zwei sich parallel zur Förderrichtung 106 erstreckende Förderstränge 104a und 104b umfassen, welche in einer zur Förderrichtung 106 senkrechten horizontalen Richtung voneinander beabstandet sind.

Der Applikationsbereich 108 ist der Innenraum der Lackierkabine 110, welche in ihrer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine Kabinenwand 114 begrenzt ist.

Zu beiden Seiten der Fördervorrichtung 104 sind in der Lackierkabine 110 Spritzlackiereinrichtungen 116 (siehe Fig. 1 bis 4) angeordnet, beispielsweise in Form von Lackierrobotern.

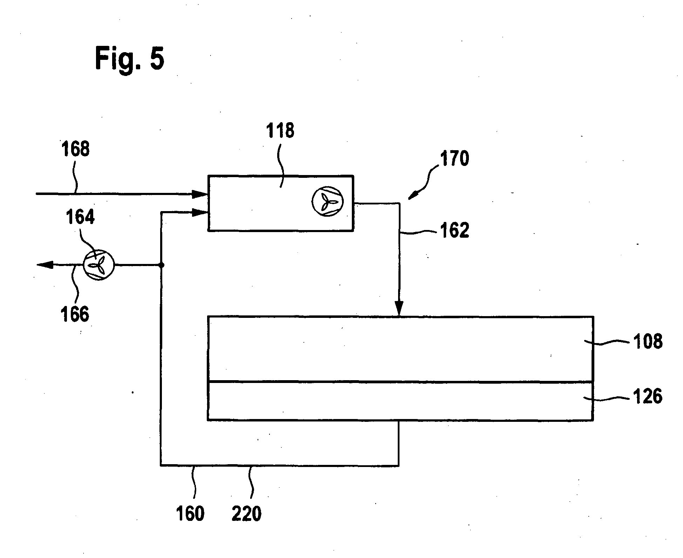

Mittels einer in Fig. 5 schematisch dargestellten Luftstromerzeugungseinrichtung 118 wird ein Luftstrom erzeugt, welcher den Applikationsbereich 108 im wesentlichen vertikal von oben nach unten durchsetzt, wie dies in Fig. 1 durch die Pfeile 119 angedeutet ist.

Dieser Luftstrom nimmt im Applikationsbereich 108 Lack-Overspray in Form von Overspray-Partikeln auf.

Der Begriff "Partikel" umfasst dabei sowohl feste als auch flüssige Teilchen, insbesondere Tröpfchen.

Wird in der Anlage 100 ein Nasslack zum Lackieren verwendet, so besteht der Nasslack-Overspray aus Lacktröpfchen.

Die meisten der Overspray-Partikel weisen eine größte Abmessung im Bereich von ungefähr 1 µm bis ungefähr 100 µm auf.

Der durch die Pfeile 120 dargestellte Abluftstrom verlässt die Lackierkabine 110 durch einen Kabinenboden 122, welcher durch luftdurchlässige Gitterroste 124 gebildet ist.

Die Anlage 100 umfasst ferner eine als Ganzes mit 126 bezeichnete Vorrichtung zum Abtrennen von Nasslack-Overspray aus dem Luftstrom 120, welche unterhalb des Applikationsbereichs 108 angeordnet ist.

Die Vorrichtung 126 umfasst eine im wesentlichen quaderförmige Strömungskammer 128, welche sich in der Förderrichtung 106 über die ganze Länge der Lackierkabine 110 hinweg erstreckt und in der Querrichtung 112 der Lackierkabine 110 durch vertikale Seitenwände 130 begrenzt ist, die im wesentlichen mit den seitlichen Kabinenwänden 114 der Lackierkabine 110 fluchten, so dass die Strömungskammer 128 im wesentlichen dieselbe horizontale Querschnittsfläche aufweist wie die Lackierkabine 110 und im wesentlichen vollständig innerhalb der vertikalen Projektion der Grundfläche der Lackierkabine 110 angeordnet ist.

Die Strömungskammer 128 umfasst eine Aufteileinrichtung 210, welche zwei vertikal ausgerichtete, in der Querrichtung 112 der Lackierkabine 110 voneinander beabstandete Trennwände 212 aufweist.

Diese vertikalen Trennwände 212 sind jeweils in einem seitlichen Abstand von ungefähr 0,5 m von der Außenkontur der zu lackierenden Fahrzeugkarosserien 102 angeordnet.

Sie dienen dazu, den aus dem Applikationsbereich 108 kommenden Abluftstrom 120 in einen zentralen ersten Teil-Abluftstrom 214 und zwei seitliche zweite Teil-Abluftströme 216 aufzuteilen.

Die beiden zweiten Teil-Abluftströme 216 enthalten die Luft, welche die seitlichen Randbereiche der Lackierkabine 110 passiert hat und deshalb eine geringere spezifische Overspray-Beladung aufweist.

Diese beiden zweiten Teil-Abluftströme 216 gelangen jeweils in einen zwischen einer Trennwand 212 und einer vertikalen Seitenwand 130 der Strömungskammer 128 angeordneten seitlichen Abschnitt 218 der Strömungskammer, in welchen jeweils ein zweiter Abluftkanal 220 integriert ist, der längs der Förderrichtung 106 verläuft und an seiner oberen Begrenzungswand 222 jeweils eine zweite Abtrennvorrichtung 223 zum Abtrennen von Nasslack-Overspray aus dem zweiten Teil-Abluftstrom 216 mit mehreren nicht regenerierbaren Filtern 224 trägt, durch welche der jeweilige zweite Teil-Abluftstrom 216 in den jeweiligen zweiten Abluftkanal 220 eintritt.

Die nicht regenerierbaren Filter 224 können als Tiefenfilter, insbesondere als Taschen- oder Beutelfilter, ausgebildet sein.

Die nicht regenerierbaren Filter 224 nehmen beim Durchtritt des jeweiligen zweiten Teil-Abluftstroms 216 den darin enthaltenen Nasslack-Overspray auf.

Nach Erreichen einer vorgegebenen Maximalbeladung mit abgeschiedenem Overspray werden die nicht regenerierbaren Filter 224 gegen unbeladene Filter ausgetauscht. Da die zweiten Teil-Abluftströme nur eine relativ geringe Overspray-Konzentration aufweisen, ist die Standzeit der nicht regenerierbaren Filter 224 vergleichsweise hoch (beispielsweise mindestens eine Woche), so dass die durch den Austausch verursachten Kosten und der damit verbundene Wartungsaufwand gering sind.

Die Trennwände 212 der Aufteileinrichtung 210 bilden zugleich seitliche Begrenzungswände der zweiten Abluftkanäle 220, so dass die Anzahl der benötigten Bauelemente gering gehalten wird.

Der zentrale erste Teil-Abluftstrom 214 enthält die Luft, welche den Mittelbereich der Lackierkabine 110 passiert hat, durch den die zu lackierenden Fahrzeugkarosserien 102 gefördert werden, und deshalb eine hohe spezifische Overspray-Beladung aufweist.

Dieser erste Teil-Abluftstrom gelangt durch einen verengten Bereich 140 des Strömungswegs zwischen den beiden Trennwänden 212 in einen unteren Abschnitt 138 der Strömungskammer 128.

Am unteren Ende des verengten Bereiches 140 des Strömungsweges sind zwei Precoat-Zuführeinrichtungen 144 angeordnet, welche kontinuierlich oder intervallweise ein Precoat-Material in den ersten Teil-Abluftstrom 214 abgeben.

Die Precoat-Zuführeinrichtungen 144 können beispielsweise als Precoat-Sprühdüsen ausgebildet sein, welche das Precoat-Material in Form eines Sprühnebels in den ersten Teil-Abluftstrom 214 abgeben.

Die Anordnung der Precoat-Zuführeinrichtungen 144 an dem verengten Bereich 140 des Strömungswegs des ersten Teil-Abluftstroms 214 bietet den Vorteil, dass dort aufgrund der erhöhten Strömungsgeschwindigkeit des Teil-Abluftstroms 214 und aufgrund des kleinen Durchtrittsquerschnittes Turbulenzen in der Abluftströmung entstehen, welche für eine Verwirbelung des Precoat-Materials in dem Teil-Abluftstrom 214 und somit für eine besonders gute Verteilung des Precoat-Materials in dem Teil-Abluftstrom 214 sorgen.

Die Precoat-Zuführeinrichtungen 144 sind an eine (nicht dargestellte) Precoat-Zuführleitung angeschlossen, welche das Precoat-Material in fließfähigem Zustand mittels einer (nicht dargestellten) Precoat-Zuführpumpe aus einem (nicht dargestellten) Precoat-Speicherbehälter zuführt.

Die Precoat-Zuführeinrichtungen 144 können jeweils an einer unteren Begrenzungswand 226 eines der zweiten Abluftkanäle 220 angeordnet sein.

Als Precoat-Material kann grundsätzlich jedes Medium verwendet werden, welches dazu in der Lage ist, den Flüssigkeitsanteil des Nasslack-Oversprays aufzunehmen.

Insbesondere kommen als Precoat-Materialien beispielsweise Kalk, Aluminiumsilikate, Aluminiumoxide, Siliziumoxide, Pulverlack oder ähnliches in Betracht.

Um das Precoat-Material fließfähig und sprühbar zu machen, werden beispielsweise wäßrige Dispersionen der genannten Materialien verwendet.

Wenn die auf die Precoat-Zuführeinrichtungen 144 folgenden Filter nicht precoated, sondern lediglich befeuchtet werden sollen, kann mittels der Precoat-Zuführeinrichtungen 144 auch lediglich ein Befeuchtungsmedium in den Teil-Abluftstrom 214 eingebracht werden.

Als solche Befeuchtungsmedien kommen insbesondere beispielsweise VE-Wasser, Butylglykol oder andere Lösungsmittel in Betracht.

Im unteren Abschnitt 138 der Strömungskammer 128 ist zu beiden Seiten des verengten Bereichs 140 jeweils eine erste Abtrennvorrichtung 145 zum Abtrennen von Nasslack-Overspray aus dem ersten Teil-Abluftstrom 214 vorgesehen. Die Abtrennvorrichtungen 145 umfassen jeweils mehrere, an den beiden einander gegenüberliegenden vertikalen Seitenwänden 130 der Strömungskammer 128 angeordnete, in der Förderrichtung 106 voneinander beabstandete regenerierbare Oberflächenfilter 146, welche mit ihren Filterelementen 154 in den unteren Abschnitt 138 der Strömungskammer 128 hineinragen (siehe insbesondere die Fig. 1, 2 und 4).

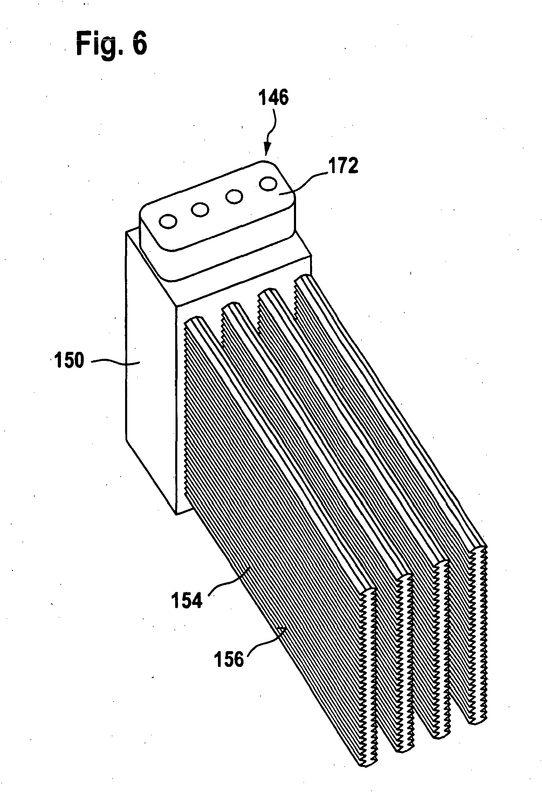

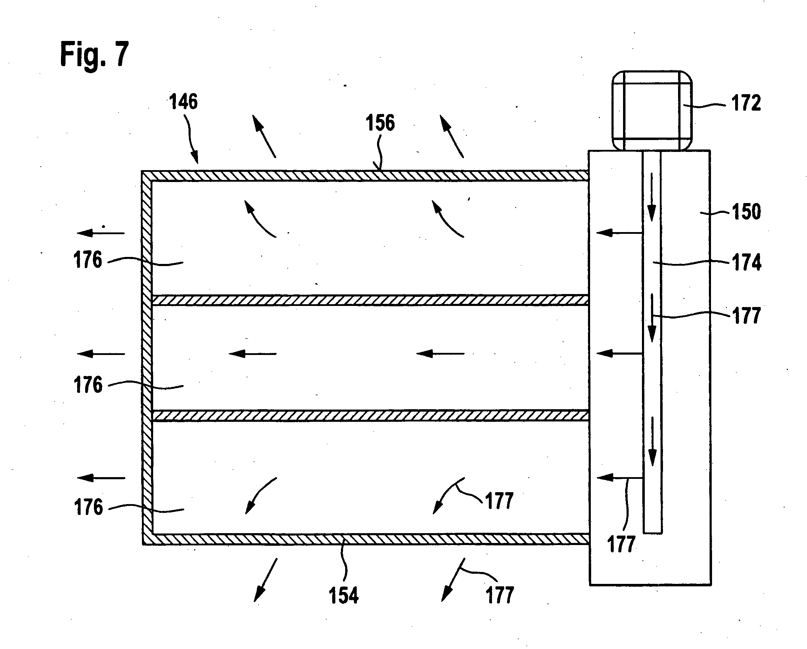

Eines dieser regenerierbaren Oberflächenfilter 146 ist in den Fig. 6 und 7 im Detail dargestellt.

Jedes der regenerierbaren Oberflächenfilter 146 umfasst einen hohl ausgebildeten Grundkörper 150, an welchem mehrere, beispielsweise jeweils vier, Filterelemente 154 gehalten sind.

Die Filterelemente 154 sind beispielsweise im wesentlichen plattenförmig ausgebildet und weisen, wie aus Fig. 6 zu ersehen ist, vorzugsweise einen gezackten Querschnitt auf, um die zur Verfügung stehende Filteroberfläche 156 zu vergrößern.

Die Filterelemente 154 können beispielsweise als Platten aus gesintertem Polyethlyen, die an ihrer Außenfläche mit einer Membran aus Polytetrafluorethylen (PTFE) versehen sind, ausgebildet sein.

Alternativ oder ergänzend hierzu kann auch vorgesehen sein, dass die Filterelemente 154 aus einem Vliesstoff mit einer PTFE-Beschichtung gebildet sind.

Die Beschichtung aus PTFE dient jeweils dazu, die Filterklasse des Oberflächenfilters 146 zu erhöhen (d.h. dessen Durchlässigkeit zu verringern) und ferner das permanente Anhaften des aus dem Abluftstrom 120 abgetrennten Nasslack-Oversprays zu verhindern.

Sowohl das Grundmaterial der Filterelemente 154 als auch deren PTFE-Beschichtung weisen eine Porosität auf, so dass die Abluft durch die Poren in den Innenraum 176 des jeweiligen Filterelements 154 gelangen kann.

Um das Verkleben der Filteroberfläche 156 zu verhindern, ist dieselbe ferner mit einer Sperrschicht aus dem in den Abluftstrom abgegebenen Precoat-Material versehen.

Diese Sperrschicht bildet sich im Betrieb der Vorrichtung 126 einfach durch Abscheidung des in den Teil-Abluftstrom 214 abgegebenen Precoat-Materials an der Filteroberfläche 156.

Vorzugsweise wird die Menge des in den Teil-Abluftstrom 214 abgegebenen Precoat-Materials so bemessen, dass die Dicke der Sperrschicht aus dem Precoat-Material auf den Filterelementen 154 der regenerierbaren Oberflächenfilter 146 im Bereich von beispielsweise ungefähr 150 µm bis 200 µm liegt.

Der Teil-Abluftstrom 214 überstreicht die Filteroberflächen 156 der Filterelemente 154 des regenerierbaren Oberflächenfilters 146, wobei sowohl das mitgeführte Precoat-Material als auch der mitgeführte Nasslack-Overspray an den Filteroberflächen 156 abgeschieden werden, und gelangt durch die porösen Filteroberflächen 156 in die Innenräume 176 der Filterelemente 154, die mit dem Hohlraum innerhalb des Grundkörpers 150 verbunden sind.

Der gereinigte Teil-Abluftstrom 214 gelangt somit durch den Grundkörper 150 in jeweils ein Abluftrohr 158, welches von dem jeweiligen regenerierbaren Oberflächenfilter 146 zu einem seitlich neben einer vertikalen Seitenwand 130 der Strömungskammer 128 parallel zur Förderrichtung 106 verlaufenden ersten Abluftkanal 160 führt.

Wie aus der schematischen Darstellung der Fig. 5 zu ersehen ist, gelangt die von dem Nasslack-Overspray gereinigte Abluft aus den beiden ersten Abluftkanälen 160 und aus den beiden zweiten Abluftkanälen 220 zumindest teilweise zurück zu der Luftstromerzeugungseinrichtung 118, welche die gereinigte Abluft über eine Zuführleitung 162 erneut dem Applikationsbereich 108 in der Lackierkabine 110 zuführt.

Ein anderer Teil des gereinigten Abluftstroms wird über ein Abluftgebläse 164 in einer Abluftleitung 166 an die Umgebung abgegeben.

Dieser an die Umgebung abgegebene Teil des Abluftstroms wird durch Frischluft ersetzt, welche der Luftstromerzeugungseinrichtung 118 über eine Frischluftzuführleitung 168 zugeführt wird.

Der Großteil der durch den Applikationsbereich 108 hindurchgeführten Luft wird somit in einem Umluftkreislauf 170 geführt, welcher die Luftstromerzeugungseinrichtung 118, die Zuführleitung 162, den Applikationsbereich 108, die Strömungskammer 128, die ersten Abluftkanäle 160 und die zweiten Abluftkanäle 220 umfasst, wodurch eine ständige Aufheizung frisch zugeführter Zuluft vermieden und somit die Energiekosten deutlich gesenkt werden.

Da die Abtrennung des Nasslack-Oversprays aus dem Abluftstrom 120 mittels der nicht regenerierbaren Filter 224 und mittels der regenerierbaren Oberflächenfilter 146 trocken, d.h. ohne Auswaschung mit einer Reinigungsflüssigkeit, erfolgt, wird die im Umluftkreislauf 170 geführte Luft beim Abtrennen des Nasslack-Oversprays nicht befeuchtet, so dass auch keinerlei Vorrichtungen zur Entfeuchtung der im Umluftkreislauf 170 geführten Luft erforderlich sind.

Ferner sind auch keine Vorrichtungen zur Abtrennung von Nasslack-Overspray aus einer Auswasch-Reinigungsflüssigkeit erforderlich.

Die regenerierbaren Oberflächenfilter 146 werden in bestimmten Zeitintervallen, wenn ihre Beladung mit Nasslack-Overspray ein vorgegebenes Maß erreicht hat, durch Druckluftimpulse abgereinigt.

Diese Abreinigung kann beispielsweise einmal pro Arbeitsschicht, d.h. zweimal bis dreimal pro Arbeitstag, erfolgen.

Die erforderlichen Druckluftimpulse werden mittels eines Druckluftspeichers 172 erzeugt, welcher an dem Grundkörper 150 des jeweiligen regenerierbaren Oberflächenfilters 146 angeordnet ist und dazu in der Lage ist, Druckluftimpulse an Druckluftrohre 174 abzugeben, welche innerhalb des jeweiligen Grundkörpers 150 verlaufen und von dem Druckluftspeicher 172 in die Innenräume 176 der Filterelemente 154 führen.

Von den Innenräumen 176 der Filterelemente 154 gelangen die Druckluftimpulse durch die porösen Filteroberflächen 156 in den Außenraum der Filterelemente 154, wobei die an den Filteroberflächen 156 gebildete Sperrschicht aus Precoat-Material und dem daran abgeschiedenen Nasslack-Overspray von den Filteroberflächen 156 abgelöst wird, so dass die Filteroberflächen 156 in ihren abgereinigten Ursprungszustand zurückversetzt werden.

Die Strömungsrichtung der Druckluft durch ein regenerierbares Oberflächenfilter 146 beim Abreinigen ist in Fig. 7 durch die Pfeile 177 dargestellt.

Der Druckluftvorrat in den Druckluftspeichern 172 wird über (nicht dargestellte) Druckluftzuführleitungen aus einem bauseitig vorhandenen Druckluftnetz ergänzt.

Alternativ oder ergänzend zu einer Abreinigung durch Druckluftimpulse kann auch vorgesehen sein, dass die regenerierbaren Oberflächenfilter 146 mittels einer geeigneten Spüleinrichtung in vorgegebenen Intervallen abgespült werden, um den an den Filteroberflächen 156 abgeschiedenen Nasslack-Overspray zu entfernen.

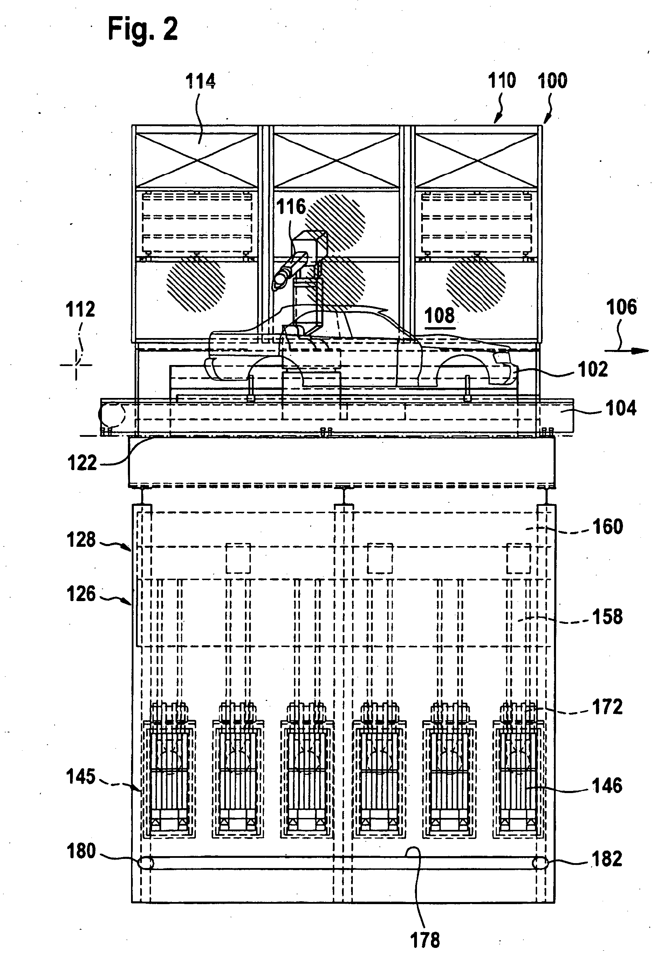

Wie am besten aus den Fig. 1 und 2 zu ersehen ist, gelangt das von den Filteroberflächen 156 der regenerierbaren Oberflächenfilter 146 abgereinigte Material auf ein am Boden der Strömungskammer 128 angeordnetes Sammelband 178, das beispielsweise als ein über eine angetriebene Rolle 180 und eine nicht angetriebene Umlenkrolle 182 umlaufendes, endloses Band ausgebildet ist.

Die angetriebene Rolle 180 wird mittels eines Antriebsmotors 184 in Drehung versetzt, um das Sammelband 178 längs der Förderrichtung 106 in Bewegung zu versetzen.

Auf diese Weise wird mittels des Sammelbandes 178 das von den regenerierbaren Oberflächenfiltern 146 auf die Oberfläche des Sammelbands 178 gelangte Material, welches Precoat-Material und abgeschiedenen Nasslack-Overspray umfasst, zu einer (nicht dargestellten) Abscheidevorrichtung transportiert, von welcher dieses Material (beispielsweise mittels Abstreifern) von dem Sammelband 178 gelöst, gesammelt und gegebenenfalls einer Weiterverwendung zugeführt wird.

Das Sammelband 178 nimmt auch einen Teil des Nasslack-Oversprays auf, welcher direkt aus dem ersten Teil-Abluftstrom 214 auf das Sammelband 178 gelangt, bevor der Teil-Abluftstrom 214 die regenerierbaren Oberflächenfilter 146 erreicht.

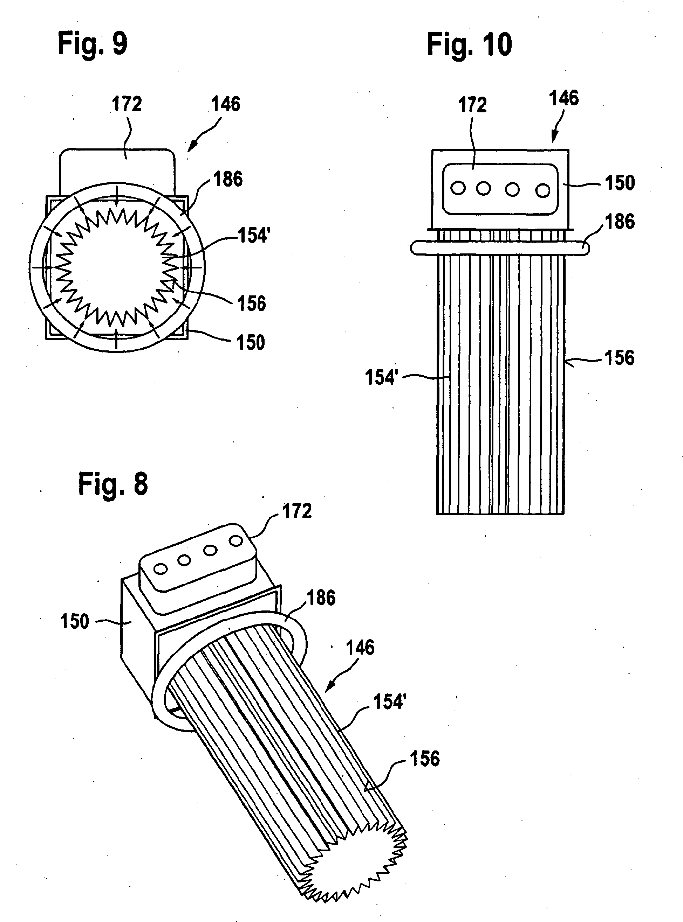

Eine alternative Ausgestaltung der regenerierbaren Oberflächenfilter 146, welche in der Vorrichtung 126 verwendbar sind, ist in den Fig. 8 bis 10 dargestellt.

Das in den Fig. 8 bis 10 dargestellte regenerierbare Oberflächenfilter 146 umfasst statt einer Mehrzahl vertikal ausgerichteter, nebeneinander angeordneter plattenförmiger Filterelemente ein im wesentlichen zylindrisches Filterelement 154', das zur Vergrößerung der zur Verfügung stehenden Filteroberfläche 156 ebenfalls eine im Querschnitt gesehen gezackte Filteroberfläche 156 aufweist.

Zusätzlich zur Erzeugung der Druckluftimpulse ist zur Abreinigung des regenerierbaren Oberflächenfilters 146 bei dieser Ausführungsform eine Spülflüssigkeits-Ringleitung 186 vorgesehen, welche eine Spülflüssigkeit durch an der radialen Innenseite der Spülflüssigkeits-Ringleitung 186 vorgesehene Spülflüssigkeits-Austrittsöffnungen gegen die Filteroberfläche 156 des Filterelements 154' spritzt, so dass die Spülflüssigkeit die Sperrschicht und den daran abgeschiedenen Nasslack-Overspray von der Filteroberfläche 156 ablöst und auf das Sammelband 178 befördert.

Die Vorrichtung 126 zum Abtrennen von Nasslack-Overspray aus dem Abluftstrom 120 ist im wesentlichen symmetrisch zur vertikalen Längsmittelebene 194 der Lackierkabine 110 ausgebildet.

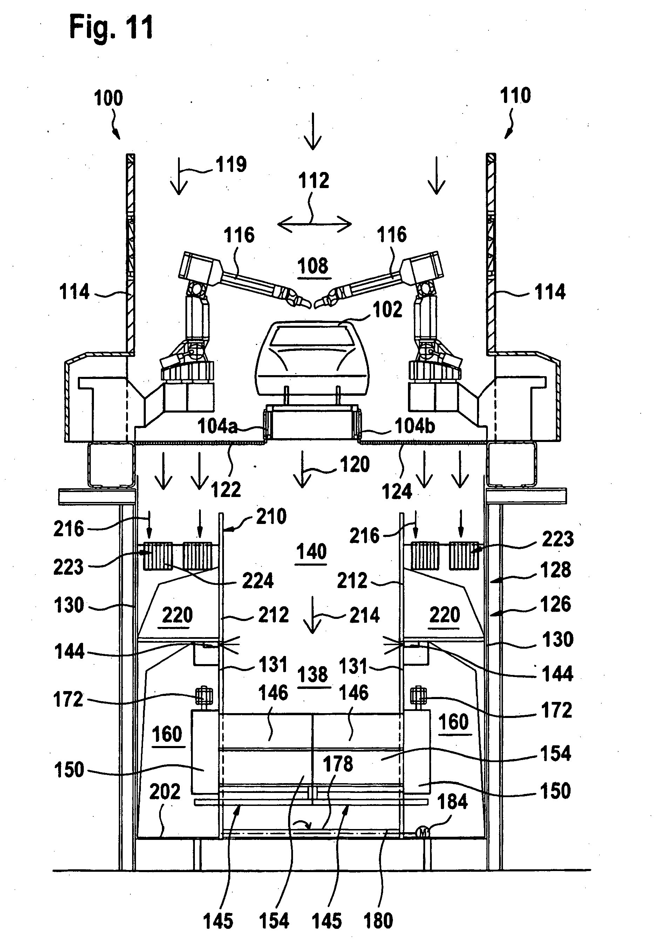

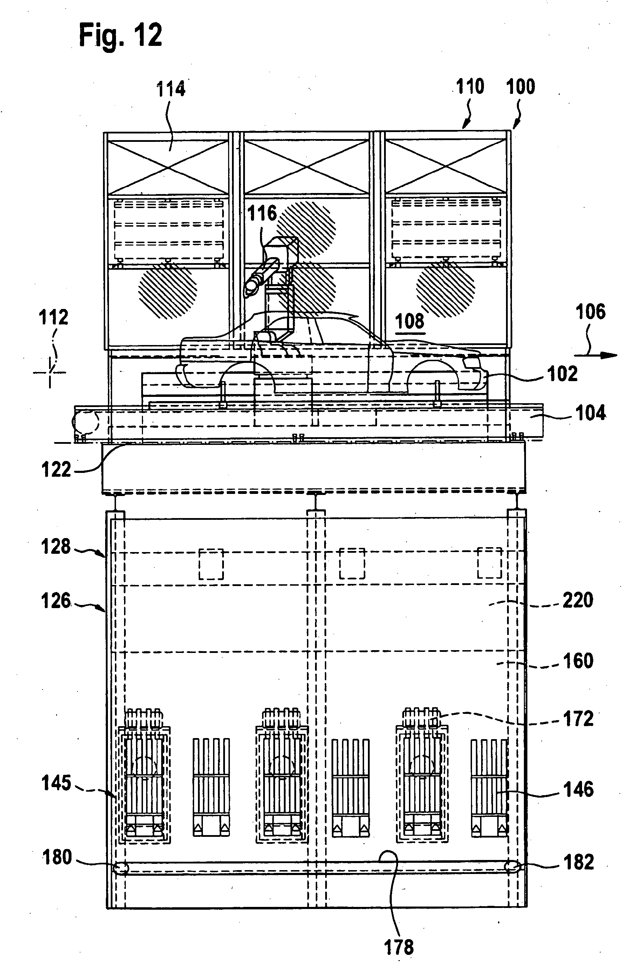

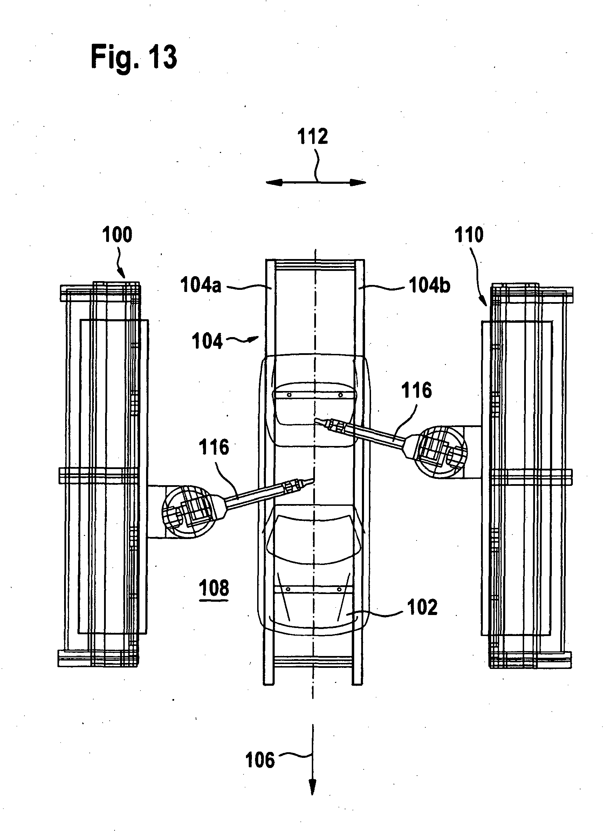

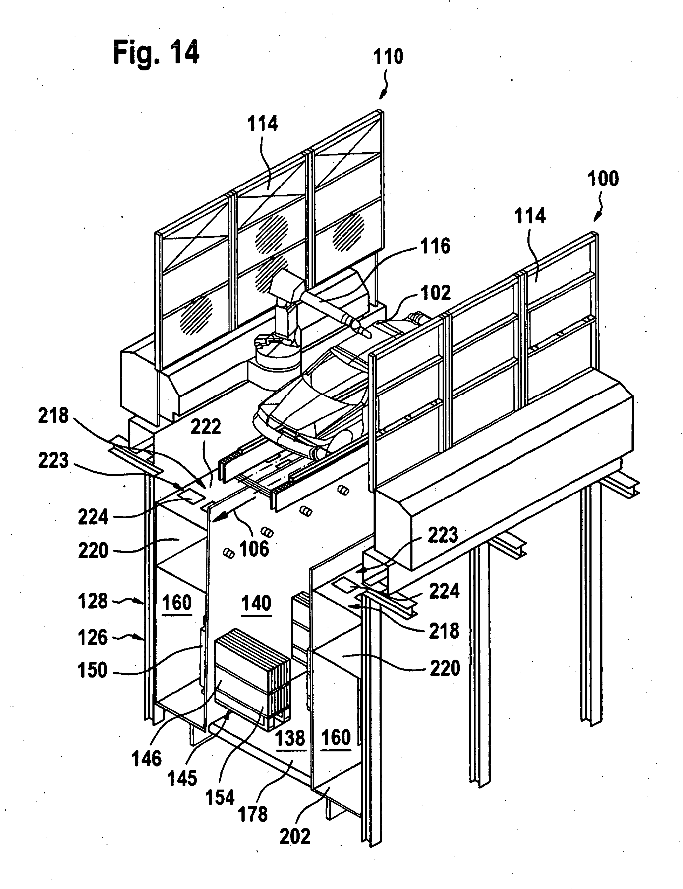

Eine in den Fig. 11 bis 14 dargestellte zweite Ausführungsform einer Anlage 100 zum Lackieren von Fahrzeugkarosserien 102 unterscheidet sich von der vorstehend beschriebenen ersten Ausführungsform dadurch, dass die regenerierbaren Oberflächenfilter 146 der ersten Abtrennvorrichtungen 145 bei dieser Ausführungsform nicht über Abluftrohre 158 mit den ersten Abluftkanälen 160 verbunden, sondern direkt an einer seitlichen Begrenzungswand 131 des jeweiligen ersten Abluftkanals 160 angeordnet sind, wobei die ersten Abluftkanäle 160 ferner nicht seitlich außerhalb der Seitenwand 130 der Strömungskammer 128 angeordnet sind, sondern statt dessen in die Strömungskammer 128 integriert und direkt unter jeweils einem der zweiten Abluftkanäle 220 angeordnet sind, so dass die untere Begrenzungswand 226 eines zweiten Abluftkanals 220 zugleich eine obere Begrenzungswand des jeweils darunter angeordneten ersten Abluftkanals 160 bildet.

Ferner erstrecken sich die beiden ersten Abluftkanäle 160 von der Unterseite der zweiten Abluftkanäle 220 bis zu einem Boden 202 der Strömungskammer 128, so dass der Boden 202 teilweise durch die ersten Abluftkanäle 160 abgedeckt ist und somit nicht mit Nasslack-Overspray aus dem ersten Teil-Abluftstrom 214 verschmutzt werden kann.

Das Sammelband 178 erstreckt sich bei dieser zweiten Ausführungsform nicht über die gesamte Breite der Strömungskammer 128, sondern lediglich über den zwischen den beiden ersten Abluftkanälen 160 verbleibenden Zwischenraum.

Ferner ist bei dieser Ausführungsform vorgesehen, dass die Filterelemente 154 der regenerierbaren Oberflächenfilter 146 der einander gegenüberliegenden ersten Abtrennvorrichtungen 145 an ihren freien Enden aneinander anstoßen, so dass die Filterelemente 154 der regenerierbaren Oberflächenfilter 146 den gesamten Zwischenraum zwischen den ersten Abluftkanälen 160 lückenlos überdecken.

Bei dieser Ausführungsform ist die Vorrichtung 126 zum Abtrennen von Nasslack-Overspray aus dem Abluftstrom 120 besonders platzsparend ausgebildet, da sowohl die ersten Abluftkanäle 160 als auch die zweiten Abluftkanäle 220 innerhalb einer vertikalen Projektion der Grundfläche der Lackierkabine 110 angeordnet sind.

Im übrigen stimmt die in den Fig. 11 bis 14 dargestellte zweite Ausführungsform hinsichtlich Aufbau und Funktion mit der in den Fig. 1 bis 10 dargestellten ersten Ausführungsform überein, auf deren vorstehende Beschreibung insoweit Bezug genommen wird.

## Patentansprüche

1. Vorrichtung zum Abtrennen von Nasslack-Overspray aus einem Overspray-Partikel enthaltenden Abluftstrom (120), wobei die Overspray-Partikel in einem Applikationsbereich (108) einer Lackieranlage (100) in den Abluftstrom (120) gelangen,
**dadurch gekennzeichnet,**
**dass** die Vorrichtung (126)
- eine Aufteileinrichtung (210) zum Aufteilen des Abluftstroms (120) in mindestens einen ersten Teil-Abluftstrom (214) und mindestens einen zweiten Teil-Abluftstrom (216), wobei der mindestens eine erste Teil-Abluftstrom (214) und der mindestens eine zweite Teil-Abluftstrom (216) eine unterschiedliche spezifische Overspray-Beladung aufweisen,
- mindestens eine erste Abtrennvorrichtung (145) zum Abtrennen des Oversprays aus dem ersten Teil-Abluftstrom (214), welche mindestens ein regenerierbares Oberflächenfilter (146) umfasst, und
- mindestens eine zweite Abtrennvorrichtung (223) zum Abtrennen des Oversprays aus dem zweiten Teil-Abluftstrom (216), welche mindestens ein nicht regenerierbares Filter (224) umfasst,
umfasst,
wobei nur der mindestens eine zweite Teil-Abluftstrom (216), welcher die geringere Overspray-Baladung aufweist, durch die zweite Abtrennvorrichtung (223) geführt ist.

2. Vorrichtung nach Anspruch 1, **dadurch gekennzeichnet, dass** die Vorrichtung (126) unterhalb einer Lackierkabine (110) angeordnet ist und mindestens einen ersten Abluftkanal (160) umfasst, in welchen der mindestens eine erste Teil-Abluftstrom (214) nach dem Passieren der ersten Abtrennvorrichtung (145) eintritt, wobei der erste Abluftkanal (160) innerhalb einer vertikalen Projektion der Grundfläche der Lackierkabine (110) angeordnet ist.

3. Vorrichtung nach einem der Ansprüche 1 oder 2, **dadurch gekennzeichnet, dass** die Vorrichtung (126) unterhalb einer Lackierkabine (110) angeordnet ist und mindestens einen zweiten Abluftkanal (220) umfasst, in welchen der mindestens eine zweite Teil-Abluftstrom (216) nach dem Passieren der zweiten Abtrennvorrichtung (223) eintritt, wobei der zweite Abluftkanal (220) innerhalb einer vertikalen Projektion einer Grundfläche der Lackierkabine (110) angeordnet ist.

4. Vorrichtung nach einem der Ansprüche 1 bis 3, **dadurch gekennzeichnet, dass** vertikal über der ersten Abtrennvorrichtung (145) und/oder vertikal über der zweiten Abtrennvorrichtung (223) jeweils mindestens ein Abschirmelement angeordnet ist, das ein senkrechtes Herabfallen von Gegenständen, Schmutz und/oder Lackpartikeln aus dem Applikationsbereich (108) auf die erste Abtrennvorrichtung (145) bzw. auf die zweite Abtrennvorrichtung (223) verhindert.

5. Vorrichtung nach Anspruch 4, **dadurch gekennzeichnet, dass** die Vorrichtung (126) mindestens einen zweiten Abluftkanal (220) umfasst, in wel-chen der mindestens eine zweite Teil-Abluftstrom (216) nach dem Passieren der zweiten Abtrennvorrichtung (223) eintritt, und dass der zweite Abluftkanal (220) zumindest teilweise vertikal über der ersten Abtrennvorrichtung (145) angeordnet ist.

6. Vorrichtung nach einem der Ansprüche 1 bis 5, **dadurch gekennzeichnet, dass** das mindestens eine regenerierbare Oberflächenfilter (146) eine ein Precoat-Material umfassende Sperrschicht aufweist, welche ein Verkleben der Filteroberfläche (156) verhindert.

7. Vorrichtung nach Anspruch 6, **dadurch gekennzeichnet, dass** die Vorrichtung (126) mindestens eine Precoat-Zuführeinrichtung (144) umfasst, welche ein Precoat-Material in den ersten Teil-Abluftstrom (214) abgibt.

8. Vorrichtung nach Anspruch 7, **dadurch gekennzeichnet, dass** die Abgabe von Precoat-Material in den ersten Teil-Abluftstrom (214) intervallweise erfolgt.

9. Vorrichtung nach einem der Ansprüche 1 bis 8, **dadurch gekennzeichnet, dass** das mindestens eine regenerierbare Oberflächenfilter (146) intervallweise abreinigbar ist.

10. Vorrichtung nach einem der Ansprüche 1 bis 9, **dadurch gekennzeichnet, dass** das mindestens eine regenerierbare Oberflächenfilter (146) im Betrieb der Vorrichtung (126) eine feuchte Oberfläche aufweist.

11. Vorrichtung nach Anspruch 10, **dadurch gekennzeichnet, dass** die Oberfläche des mindestens einen regenerierbaren Oberflächenfilters (146) kontinuierlich oder intervallweise abspülbar ist.

12. Vorrichtung nach einem der Ansprüche 1 bis 11, **dadurch gekennzeichnet, dass** das mindestens eine regenerierbare Oberflächenfilter (146) durch Druckluftimpulse abreinigbar ist.

13. Vorrichtung nach einem der Ansprüche 1 bis 12, **dadurch gekennzeichnet, dass** die Vorrichtung (126) einen Umluftkreislauf (170) aufweist, in welchem der Abluftstrom (120), aus welchem der Nasslack-Overspray abgetrennt worden ist, zumindest teilweise erneut dem Applikationsbereich (108) zugeführt wird.

14. Anlage zum Lackieren von Gegenständen, insbesondere von Fahrzeugkarosserien (102), umfassend mindestens eine Lackierkabine (110) und mindestens eine Vorrichtung (126) zum Abtrennen von Nasslack-Overspray aus einem Overspray-Partikel enthaltenden Abluftstrom (120) nach einem der Ansprüche 1 bis 13.

15. Anlage nach Anspruch 14, welche ferner einen zu lackierenden Gegenstand umfasst.

16. Anlage nach Anspruch 15, **dadurch gekennzeichnet, dass** der erste Teil-Abluftstrom (214) eine höhere spezifische Overspray-Beladung aufweist als der zweite Teil-Abluftstrom (216).

17. Anlage nach einem der Ansprüche 15 oder 16, **dadurch gekennzeichnet, dass** der erste Teil-Abluftstrom (214) Luft umfasst, welche den zu lackierenden Gegenstand (102) in einem Abstand von weniger als 0,5 m umströmt hat.

18. Anlage nach Anspruch 17, **dadurch gekennzeichnet, dass** der erste Teil-Abluftstrom (214) Luft umfasst, welche den zu lackierenden Gegenstand (102) direkt angeströmt hat.

19. Anlage nach einem der Ansprüche 15 bis 18, **dadurch gekennzeichnet, dass** der zweite Teil-Abluftstrom (216) Luft umfasst, welche den zu lackierenden Gegenstand (102) in einem Abstand von mindestens 0,5 m passiert hat.

## Claims

1. Device for separating wet paint overspray from an exhaust air stream (120) containing overspray particles, the overspray particles arriving in the exhaust air stream (120) in an application region (108) of a painting facility (100), **characterised in that** the device (126) comprises
- a dividing mechanism (210) to divide the exhaust air stream (120) into at least one first part exhaust air stream (214) and at least one second part exhaust air stream (216), the at least one first part exhaust air stream (214) and the at least one second part exhaust air stream (216) having a different specific overspray loading,
- at least one first separating device (145) to separate the overspray from the first part exhaust air stream (214), which comprises at least one regenerable surface filter (146), and
- at least one second separating device (223) to separate the overspray from the second part exhaust air stream (216), which comprises at least one non-regenerable filter (224),
wherein only the at least one second part exhaust air stream (216), which has the smaller overspray loading, is guided through the second separating device (223).

2. Device according to claim 1, **characterised in that** the device (126) is arranged below a painting booth (110) and comprises at least one first exhaust air channel (160), which the at least one first part exhaust air stream (214) enters after passing the first separating device (145), the first exhaust air channel (160) being arranged within a vertical projection of the base area of the painting booth (110).

3. Device according to either of claims 1 or 2, **characterised in that** the device (126) is arranged below a painting booth (110) and comprises at least one second exhaust air channel (220), which the at least one second part exhaust air stream (216) enters after passing the second separating device (223), the second exhaust air channel (220) being arranged within a vertical projection of a base area of the painting booth (110).

4. Device according to any one of claims 1 to 3, **characterised in that** at least one shielding element, which prevents items, dirt and/or paint particles vertically dropping from the application region (108) onto the first separating device (145) or onto the second separating device (223), is in each case arranged vertically above the first separating device (145) and/or vertically above the second separating device (223).

5. Device according to claim 4, **characterised in that** the device (126) comprises at least one second exhaust air channel (220), which the at least one second part exhaust air stream (216) enters after passing the second separating device (223), and **in that** the second exhaust air channel (220) is arranged at least partly vertically above the first separating device (145).

6. Device according to any one of claims 1 to 5, **characterised in that** the at least one regenerable surface filter (146) has a barrier layer, which comprises a precoat material and prevents clogging of the filter surface (146).

7. Device according to claim 6, **characterised in that** the device (126) comprises at least one precoat feed mechanism (144), which dispenses a precoat material into the first part exhaust air stream (214).

8. Device according to claim 7, **characterised in that** the dispensing of precoat material into the first part exhaust air stream (214) takes place at intervals.

9. Device according to any one of claims 1 to 8, **characterised in that** the at least one regenerable surface filter (146) is configured to be cleaned off at intervals.

10. Device according to any one of claims 1 to 9, **characterised in that** the at least one regenerable surface filter (146) has a moist surface during operation of the device (126).

11. Device according to claim 10, **characterised in that** the surface of the at least one regenerable surface filter (146) is configured to be rinsed off continuously or at intervals.

12. Device according to any one of claims 1 to 11, **characterised in that** the at least one regenerable surface filter (146) is configured to be cleaned off by compressed air pulses.

13. Device according to any one of claims 1 to 12, **characterised in that** the device (126) has a circulating air circuit (170), in which the exhaust air stream (120), from which the wet paint overspray has been separated, is at least partly fed to the application region (108) again.

14. Facility for painting items, in particular vehicle bodies (102), comprising at least one painting booth (110) and at least one device (126) for separating wet paint overspray from an exhaust air stream (120) containing overspray particles according to any one of claims 1 to 13.

15. Facility according to claim 14, which furthermore comprises an item to be painted.

16. Facility according to claim 15, **characterised in that** the first part exhaust air stream (214) has a higher specific overspray loading than the second part exhaust air stream (216).

17. Facility according to either of claims 15 or 16, **characterised in that** the first part exhaust air stream (214) comprises air, which has flowed around the item (102) to be painted at a spacing of less than 0.5 m.

18. Facility according to claim 17, **characterised in that** the first part exhaust air stream (214) comprises air, which has flowed directly onto the item (102) to be painted.

19. Facility according to any one claims 15 to 18, **characterised in that** the second part exhaust air stream (216) comprises air, which has passed the item (102) to be painted at a spacing of at least 0.5 m.

## Revendications

1. Système de séparation de l'excédent de peinture liquide d'un courant d'air d'évacuation (120) contenant des particules d'excédent de peinture, lesdites particules d'excédent de peinture parvenant dans le courant d'air d'évacuation (120) dans une zone d'application (108) d'une installation de peinture (100),
**caractérisé en ce que**
ledit système (126) comprend
- un dispositif de répartition (210) destiné à partager le courant d'air d'évacuation (120) entre au moins un premier courant d'air d'évacuation partiel (214) et au moins un deuxième courant d'air d'évacuation partiel (216), le au moins un premier courant d'air d'évacuation partiel (214) et le au moins un deuxième courant d'air d'évacuation partiel (216) présentant des charges spécifiques en l'excédent de peintures différentes,
- au moins un premier dispositif de séparation (145) destiné à séparer l'excédent de peinture du premier courant d'air d'évacuation partiel (214), lequel comprend au moins un filtre de surface (146) régénérable, et
- au moins un deuxième dispositif de séparation (223) destiné à séparer l'excédent de peinture du deuxième courant d'air d'évacuation partiel (216), lequel comprend au moins un filtre (224) non régénérable,
seuls le ou les deuxièmes courants d'air d'évacuation partiels (216) qui présentent la moindre charge en l'excédent de peinture traversant le deuxième dispositif de séparation (223).

2. Système selon la revendication 1, **caractérisé en ce que** ledit système (126) est disposé en dessous d'une cabine de peinture (110) et comprend au moins un premier canal d'évacuation d'air (160) où le ou les premiers courants d'air d'évacuation partiels (214) pénètrent après être passés par le premier dispositif de séparation (145), le premier canal d'évacuation d'air (160) étant disposé à l'intérieur d'une projection verticale d'une surface de base de la cabine de peinture (110).

3. Système selon la revendication 1 ou 2, **caractérisé en ce que** ledit système (126) est disposé en dessous d'une cabine de peinture (110) et comprend au moins un deuxième canal d'évacuation d'air (220) où le ou les deuxièmes courants d'air d'évacuation partiels (216) pénètrent après être passés par le deuxième dispositif de séparation (223), le deuxième canal d'évacuation d'air (220) étant disposé à l'intérieur d'une projection verticale d'une surface de base de la cabine de peinture (110).

4. Système selon l'une des revendications 1 à 3, **caractérisé en ce qu'**au moins un élément d'écran est disposé verticalement au-dessus du premier dispositif de séparation (145) et/ou verticalement au-dessus du deuxième dispositif de séparation (223), lequel empêche une chute verticale d'objets, de saleté et/ou de particules de peinture de la zone d'application (108) sur le premier dispositif de séparation (145) ou sur le deuxième dispositif de séparation (223).

5. Système selon la revendication 4, **caractérisé en ce que** ledit système (126) comprend au moins un deuxième canal d'évacuation d'air (220) où le ou les deuxièmes courants d'air d'évacuation partiels (216) pénètrent après être passés par le deuxième dispositif de séparation (223), et **en ce que** le deuxième canal d'évacuation d'air (220) est disposé au moins en partie verticalement au-dessus du premier dispositif de séparation (145).

6. Système selon l'une des revendications 1 à 5, **caractérisé en ce que** le ou les filtres de surface (146) régénérables comportent une couche de barrage comprenant un matériau de pré-couche empêchant un collage de la surface de filtre (156).

7. Système selon la revendication 6, **caractérisé en ce que** ledit système (126) comprend au moins un dispositif d'amenée (144) de pré-couche, lequel refoule un matériau de pré-couche dans le premier courant d'air d'évacuation partiel (214).

8. Système selon la revendication 7, **caractérisé en ce que** le refoulement de matériau de pré-couche dans le premier courant d'air d'évacuation partiel (214) est effectué de manière discontinue.

9. Système selon l'une des revendications 1 à 8, **caractérisé en ce que** le ou les filtres de surface (146) régénérables sont nettoyables à intervalles.

10. Système selon l'une des revendications 1 à 9, **caractérisé en ce que** le ou les filtres de surface (146) régénérables présentent une surface humide pendant le fonctionnement du système (126).

11. Système selon la revendication 10, **caractérisé en ce que** la surface du ou des filtres de surface (146) régénérables est rinçable de manière continue ou discontinue.

12. Système selon l'une des revendications 1 à 11, **caractérisé en ce que** le ou les filtres de surface (146) régénérables sont nettoyables par impulsions d'air comprimé.

13. Système selon l'une des revendications 1 à 12, **caractérisé en ce que** ledit système (126) comprend un circuit de recyclage d'air (170) où le courant d'air d'évacuation (120) duquel l'excédent de peinture liquide a été séparé est au moins en partie reconduit vers la zone d'application (108).

14. Installation de peinture d'objets, en particulier de carrosseries de véhicules (102), comprenant au moins une cabine de peinture (110) et au moins un système (126) de séparation de l'excédent de peinture liquide d'un courant d'air d'évacuation (120) contenant des particules d'excédent de peinture selon l'une des revendications 1 à 13.

15. Installation selon la revendication 14, comprenant en outre un objet à peindre.

16. Installation selon la revendication 15, **caractérisé en ce que** le premier courant d'air d'évacuation partiel (214) présente une charge spécifique en l'excédent de peinture supérieure à celle du deuxième courant d'air d'évacuation partiel (216).

17. Installation selon la revendication 15 ou 16, **caractérisé en ce que** le premier courant d'air d'évacuation partiel (214) comprend de l'air entourant un objet à peindre (102) en lui étant espacé de moins de 0,5 m.

18. Installation selon la revendication 17, **caractérisé en ce que** le premier courant d'air d'évacuation partiel (214) comprend de l'air directement appliqué contre un objet à peindre (102).

19. Installation selon l'une des revendications 15 à 18, **caractérisé en ce que** le deuxième courant d'air d'évacuation partiel (216) comprend de l'air passant à intervalle d'au moins 0,5 m d'un objet à peindre (102).
